# EUROPEAN PATENT SPECIFICATION

(11) **EP 2 319 687 B1**
(45) Date of publication and mention of the grant of the patent: **08.05.2013**
(21) Application number: 09809868.4
(22) Date of filing: 24.08.2009
(51) Int. Cl.: B32B 27/08, B32B 27/30, B32B 27/36, C08F 220/14, C08F 212/08, C08F 8/04

(54) **THERMOPLASTIC RESIN LAMINATE**
THERMOPLASTISCHES HARZLAMINAT
STRATIFIÉ RÉSINEUX THERMOPLASTIQUE

(30) Priority: 28.08.2008 JP 2008219671
(43) Date of publication of application: 11.05.2011
(73) Proprietor: Mitsubishi Gas Chemical Company, Inc., Tokyo 100-8324 (JP)
(72) Inventor: OGURO, Hiroki, Hiratsuka-shi Kanagawa 254-0016 (JP); KOIKE, Nobuyuki, Hiratsuka-shi Kanagawa 254-0016 (JP); SAEGUSA, Nobuya, Tokyo 100-8324 (JP); AOKI, Toshinari, Chiyoda-ku Tokyo 1008324 (JP)
(74) Representative: Gille Hrabal
(86) International application number: PCT/JP2009/064723
(87) International publication number: WO 2010/024217

(56) References cited:
- EP-A1- 1 757 626
- WO-A1-2006/080798
- JP-A- 5 096 693
- JP-A- 10 291 282
- JP-A- 2006 063 127
- JP-A- 2006 089 713
- JP-A- 2006 199 028
- JP-A- 2009 196 125
- JP-T- 2008 532 058

## Description

### Technical Field

The present invention relates to a thermoplastic resin laminate, and more specifically, to a thermoplastic resin laminate used in a transparent substrate material or protective material and excellent in, for example, weather resistance against high-temperature, high-humidity environments, abrasion resistance, and interlayer adhesion.

### Background Art

Transparent plates made of resins have been finding use in a wide variety of applications such as sound-proof partition walls, car ports, placards, and front surface plates for the display portions of OA instruments and portable electronic instruments. In particular, the extent to which improvements in, for example, weather resistance against high-temperature, high-humidity environments, abrasion resistance, and interlayer adhesion are requested of the front surface panels of portable display devices such as portable phone terminals, portable electronic game devices, and PDA's has been increasing because of such functionality that users carry the devices under various environments.

For example, Patent Literature 1 discloses a laminated plate obtained by laminating a methacrylic resin layer containing a crosslinked acrylate-based polymer on a polycarbonate resin layer excellent in impact resistance as means for improving those characteristics. Patent Literature 2 discloses a transparent resin laminated plate obtained by laminating a methacrylic resin layer containing an aliphatic ester or the like as such means.
However, the laminated plates each involve, for example, the following problem. The methacrylic resin layer is so poor in heat resistance as to deform under high-temperature environments, or has so high water absorbing property as to warp owing to a humidity change.
It should be noted that Patent Literature 3 discloses a resin obtained by polymerizing a (meth)acrylate monomer and an aromatic vinyl monomer and hydrogenating the polymer as a resin excellent in, for example, transparency and used in an optical part. However, it cannot be said that the performance of the resin is sufficient, and hence an additional improvement has been requested.
Patent Literature 4 discloses light-diffusing sheets comprising a thermoplastic resin (B) layer formed of a methyl methacrylate styrene copolymer and a thermoplastic resin(C) layer formed of a polycarbonate based resin, the (B) layer being laminated on one surface of the (C) layer. Optionally, a (B) layer may also be laminated on both surfaces of the (C) layer.

### Citation List

### Patent Literature

- [PTL 1]: JP 3489972 B2
- [PTL 2]: JP 2006-205478 A
- [PTL 3]: JP 2006-89713 A
- [PTL 4]: WO 2006/080798 A1

### Summary of Invention

### Technical Problem

In view of such circumstances as described above, an object of the present invention is to provide a thermoplastic resin laminate used in a transparent substrate material or protective material and excellent in, for example, weather resistance against high-temperature, high-humidity environments, abrasion resistance, and interlayer adhesion.

### Solution to Problem

The inventors of the present invention have made extensive studies to solve the above-mentioned problems. As a result, the inventors have found that a thermoplastic resin laminate having those characteristics is obtained by providing a laminate using a specific vinyl copolymer resin in its surface layer. Thus, the inventors have reached the present invention.
That is, the present invention provides the following thermoplastic resin laminate and a transparent material using the thermoplastic resin laminate.

1. A thermoplastic resin laminate, including: a thermoplastic transparent resin (A) layer; a thermoplastic resin (B) layer formed of a methyl methacrylate-styrene copolymer and/or an acrylonitrile-styrene copolymer; and a thermoplastic resin (C) layer formed of a polycarbonate-based resin, the (B) layer being laminated on one surface, or each of both surfaces, of the (C) layer, and the (A) layer being laminated on the surface of the (B) layer, wherein the thickness of the (A) layer 10 to 500 µm and the thickness of the (B) layer is 5 to 50 µm and the thickness of the (C) layer is 500 to 2,000 µm, and wherein the thermoplastic transparent resin (A) includes a vinyl copolymer resin containing a (meth)acrylate constituent unit (a) represented by the following general formula (1) and an aliphatic vinyl constituent unit (b) represented by the following general formula (2) at a molar ratio between the (meth)acrylate constituent unit (a) and the aliphatic vinyl constituent unit (b) of 15:85 to 85:15.

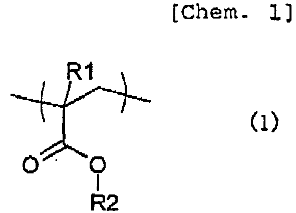

(In the formula, R1 represents hydrogen or a methyl group, and R2 represents an alkyl group having 1 to 16 carbon atoms.)

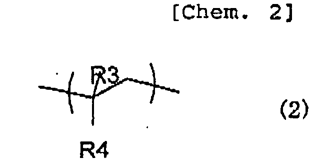

(In the formula, R3 represents hydrogen or a methyl group, and R4 represents a cyclohexyl group which may have an alkyl substituent having 1 to 4 carbon atoms.)

2. The thermoplastic resin laminate of the above-mentioned item 1, in which: the thermoplastic transparent resin (A) is obtained by polymerizing at least one kind of a (meth)acrylate monomer and at least one kind of an aromatic vinyl monomer and hydrogenating 70% or more of aromatic double bonds after the polymerization; and the resin has a glass transition temperature in the range of 110 to 140°C.
3. The thermoplastic resin laminate of the above-mentioned item 1 or 2, in which R1 and R2 in the general formula (1) each represent a methyl group.
4. The thermoplastic resin laminate of the above-mentioned item 1 or 2, in which R3 in the general formula (2) represents hydrogen and R4 in the formula represents a cyclohexyl group.
5. The thermoplastic resin laminate of the above-mentioned item 1 or 2, in which one surface, or each of both surfaces, of the thermoplastic resin laminate is subjected to one or more of a hard coat treatment, an antireflection treatment, and an antiglare treatment.
6. A transparent substratematerial formed of the the thermoplastic resin laminate of any one of the above-mentioned items 1 to 5.
7. A transparent protective material formed of the thermoplastic resin laminate of any one of the above-mentioned items 1 to 5.

### Advantageous Effects of Invention

According to the present invention, there is provided a thermoplastic resin laminate excellent in, for example, weather resistance against high-temperature, high-humidity environments, abrasion resistance, and interlayer adhesion. The thermoplastic resin laminate is used as a transparent substrate material or transparent protective material for an optical product. In particular, the thermoplastic resin laminate is suitably used in, for example, a portable display device such as a portable phone terminal, a portable electronic game device, or a PDA.

### Description of Embodiments

The thermoplastic resin laminate according to the present invention includes: a thermoplastic transparent resin (A) layer; a thermoplastic resin (B) layer formed of a methyl methacrylate-styrene copolymer and/or an acrylonitrile-styrene copolymer; and a thermoplastic resin (C) layer formed of a polycarbonate-based resin, the (B) layer being laminated on one surface, or each of both surfaces, of the (C) layer, and the (A) layer being laminated on the surface of the (B) layer,
wherein the thickness of the (A) layer 10 to 500 µm and the thickness of the (B) layer is 5 to 50 µm and the thickness of the (C) layer is 500 to 2,000 µm, and wherein the thermoplastic transparent resin (A) includes a vinyl copolymer resin containing a (meth)acrylate constituent unit (a) represented by the following general formula (1) and an aliphatic vinyl constituent unit (b) represented by the following general formula (2) at a molar ratio between the (meth)acrylate constituent unit (a) and the aliphatic vinyl constituent unit (b) of 15:85 to 85:15.

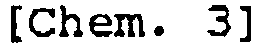

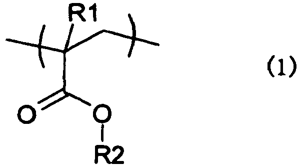

(In the formula, R1 represents hydrogen or a methyl group, and R2 represents an alkyl group having 1 to 16 carbon atoms.)

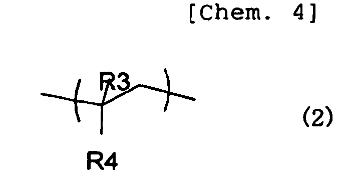

(In the formula, R3 represents hydrogen or a methyl group, and R4 represents a cyclohexyl group which may have an alkyl substituent having 1 to 4 carbon atoms.)

R2 in the (meth)acrylate constituent unit represented by the general formula (1) represents an alkyl group having 1 to 16 carbon atoms, and examples of the group include a methyl group, an ethyl group, a butyl group, a lauryl group, a stearyl group, a cyclohexyl group, and an isobornyl group. One kind of those groups maybe used alone, or two or more kinds of them may be used in combination. Of such constituent units, (meth)acrylate constituent units in which R2's represent a methyl group and/or an ethyl group are preferred, and a methacrylate constituent unit in which R1 represents a methyl group and R2 represents a methyl group is more preferred.

The aliphatic vinyl constituent unit represented by the formula (2) used in the present invention is such that R3 represents hydrogen or a methyl group, and R4 represents a cyclohexyl group or a cyclohexyl group having an alkyl group having 1 to 4 carbon atoms. One kind of such constituent units may be used alone, or two or more kinds of them may be used in combination. Of those, an aliphatic vinyl constituent unit in which R3 represents hydrogen and R4 represents a cyclohexyl group is preferred.

The thermoplastic transparent resin (A) used in the present invention is mainly formed of the (meth) acrylate constituent unit (a) represented by the general formula (1) and the aliphatic vinyl constituent unit (b) represented by the general formula (2).
A molar component ratio "(a): (b) " between the (meth) acrylate constituent unit (a) represented by the formula (1) and the aliphatic vinyl constituent unit (b) represented by the formula (2) in the present invention falls within the range of 15:85 to 85:15, preferably 25:75 to 75:25, more preferably 30:70 to 70:30.
Amolar component ratio of the (meth) acrylate constituent unit (a) to the total of the (meth)acrylate constituent unit (a) and the aliphatic vinyl constituent unit (b) of less than 15% is not practical because the laminate has so low a mechanical strength as to be brittle. In addition, a molar component ratio in excess of 85% may result in insufficient heat resistance.

The thermoplastic transparent resin (A), which is not particularly limited, is suitably a resin obtained by copolymerizing a (meth)acrylate monomer and an aromatic vinyl monomer and hydrogenating an aromatic ring after the copolymerization. It should be noted that the term "(meth)acrylic acid" refers to methacrylic acid and/or acrylic acid.
Specific examples of the aromatic vinyl monomer to be used in this case include styrene, α-methylstyrene, p-hydroxystyrene, alkoxystyrene, chlorostyrene, and derivatives thereof. Of those, preferred is styrene.

In addition, specific examples of the (meth)acrylate monomer include alkyl (meth) acrylates such as methyl (meth) acrylate, ethyl (meth)acrylate, butyl (meth)acrylate, lauryl (meth) acrylate, stearyl (meth)acrylate, cyclohexyl (meth)acrylate, and isobornyl (meth)acrylate. From the viewpoint of a balance among physical properties, it is preferred that an alkyl methacrylate be used alone, or an alkyl methacrylate and an alkyl acrylate be used in combination. Of the alkyl methacrylates, particularly preferred is methyl methacrylate or ethyl methacrylate.

A known process can be employed for the polymerization of the (meth) acrylate monomer and the aromatic vinyl monomer. The polymer can be produced by, for example, a bulk polymerization process or a solution polymerization process.
In the solution polymerization process, the polymerization is performed by, for example, a method involving: continuously supplying a monomer composition containing the monomers, a chain transfer agent, and a polymerization initiator to a perfect mixing tank; and subjecting the composition to continuous polymerization at 100 to 180°C.

As solvents capable of being used in this case, there are given, for example, hydrocarbon-based solvents such as toluene, xylene, cyclohexane, and methylcyclohexane; ester-based solvents such as ethyl acetate and methyl isobutyrate; ketone-based solvents such as acetone and methyl ethyl ketone; ether-based solvents such as tetrahydrofuran and dioxane; and alcohol-based solvents such as methanol and isopropanol.

A hydrogenation reaction after polymerizing the (meth)acrylate monomer and the aromatic vinyl monomer is performed in an appropriate solvent. A solvent used in the hydrogenation reaction may be the same as or different from the polymerization solvent. Examples of the solvent include: hydrocarbon-based solvents such as cyclohexane and methylcyclohexane; ester-based solvents such as ethyl acetate and methyl isobutyrate; ketone-based solvents such as acetone and methyl ethyl ketone; ether-based solvents such as tetrahydrofuran and dioxane; and alcohol-based solvents such as methanol and isopropanol.

A method for the hydrogenation is not particularly limited, and a known method can be employed. For example, the hydrogenation can be performed at a hydrogen pressure of 3 to 30 MPa and a reaction temperature of 60 to 250°C according to a batch mode or a continuous distribution mode. When the temperature is set to 60°C or more, a reaction time does not become excessively long. In addition, when the temperature is set to 250°C or less, neither the scission of a molecular chain nor the hydrogenation of an ester site occurs.

As a catalyst used in the hydrogenation reaction, there is given, for example, a solid catalyst obtained by supporting a metal such as nickel, palladium, platinum, cobalt, ruthenium, or rhodium, or an oxide, salt, or complex compound thereof on a porous carrier such as carbon, alumina, silica, silica-alumina, or diatomaceous earth.

The thermoplastic transparent resin (A) is preferably a resin obtained by hydrogenating 70% or more of the aromatic rings of the aromatic vinyl monomer. That is, a ratio of the aromatic vinyl constituent unit to the thermoplastic transparent resin (A) is preferably 30% or less in the thermoplastic transparent resin (A). When the ratio falls within the range of more than 30%, the transparency of the thermoplastic transparent resin (A) may reduce. The ratio falls within the range of more preferably 20% or less, most preferably 10% or less.

The thermoplastic transparent resin (A) can be blended with any other resin to such an extent that its transparency is not impaired. Examples of the other resin include a methyl methacrylate-styrene copolymer resin, polymethyl methacrylate, polystyrene, and polycarbonate.

The thermoplastic transparent resin (A) preferably has a glass transition temperature in the range of 110 to 140°C. When the glass transition temperature is 110 °C or more, the heat resistance of the laminate does not become insufficient. In addition, when the glass transition temperature is 140°C or less, the laminate has excellent processability in, for example, thermoforming. The glass transition temperature in the present invention is a temperature calculated by a middle-point method from values obtained by subjecting 10 mg of a sample to measurement with a differential scanning calorimeter at a rate of temperature increase of 10°C/min,

The thermoplastic resin (B) usedin the present invention is a resin formed of a methyl methacrylate-styrene copolymer and/or an acrylonitrile-styrene copolymer.
Examples of the methyl methacrylate-styrene copolymer resin include an MS200, an MS300, and an MS600 manufactured by Nippon Steel Chemical Co., Ltd., and the acrylonitrile-styrene copolymer resin is, for example, a Stylac AS manufactured by Asahi Kasei Chemicals.

The thermoplastic resin (C) used in the present invention is a polycarbonate-based resin. The thermoplastic resin (C) serves as the center layer of the resin laminate and is selected depending on the applications of the resin laminate. In general, a polycarbonate resin is preferably used because the resin is excellent in impact resistance, strength, and transparency.

The thermoplastic transparent resin (A), the thermoplastic resin (B), and the thermoplastic resin (C) in the present invention can be mixed with various additives before their use. Examples of the additives include an antioxidant, a UV absorber, an anti-coloring agent, an antistatic agent, a release agent, a lubricant, a dye, and a pigment. A method for the mixing is not particularly limited, and a method involving compounding the total amount of the resins, a method involving subjecting a master batch to dry blending, a method involving subjecting the total amount to dry blending, or the like can be employed.

A method based on co-extrusion, a method involving attachment through an adhesive, or the like can be employed as a method of producing the thermoplastic resin laminate of the present invention.
The co-extrusion method is not particularly limited. For example, a feed block mode involves: laminating the (B) layer on one side, or each of both sides, of the (C) layer with a feed block; laminating the (A) resin layer on the (B) layer with the feed block; extruding the resultant into a sheet shape with a T-die; and cooling the sheet while passing the sheet through forming rolls to form a desired laminate. In addition, a multi-manifold mode involves: laminating the (B) layer on one side, or each of both sides, of the (C) layer in a multi-manifold die; laminating the (A) layer on the (B) layer in the multi-manifold die; extruding the resultant into a sheet shape; and cooling the sheet while passing the sheet through forming rolls to form a desired laminate.
The method involving attachment through an adhesive is not particularly limited either, and a known method can be employed. One example of the method involves: applying an adhesive layer to one plate-shaped molded body with a spray, a brush, or a gravure roll; superimposing the other plate-shaped molded body on the adhesive layer; and crimping the other plate-shaped molded body until the adhesive layer cures to form a desired laminate.
Alternatively, an arbitrary adhesive resin (D) layer can be interposed between the (A) layer and the (B) layer and/or between the (B) layer and the (C) layer upon co-extrusion.

The thermoplastic resin laminate of the present invention preferably has a thickness in the range of 0.1 to 10.0 mm. When the thickness is 0.1 mm or more, neither a transfer failure nor a thickness accuracy failure occurs. In addition, when the thickness is 10. 0 mm or less, a thickness accuracy failure or external appearance failure due to, for example, cooling unevenness after molding does not occur. The thickness falls within the range of more preferably 0.3 to 5.0 mm and still more preferably 0.5 to 3.0 mm.

The thermoplastic transparent resin (A) layer of the thermoplastic resin laminate of the present invention has a thickness in the range of 10 to 500 µm. When the thickness is less than 10 µm, abrasion resistance or weather resistance may be insufficient. In addition, when the thickness exceeds 500 µm, impact resistance may be insufficient. The thickness preferably falls within the range of 30 to 100 µm.

The thermoplastic resin (B) layer has a thickness in the range of 5 to 50 µm. When the thickness of the (B) layer is set to fall within the range, adhesion between the (A) layer and the (C) layer can be improved without the impairment of the performance of the (A) layer.
In addition, the thickness of the thermoplastic resin (C) layer is 500 to 2000 µm, though the thickness varies depending on the applications of the laminate.

It should be noted that one surface, or each of both surfaces, of the thermoplastic resin laminate of the present invention can be subjected to one or more of a hard coat treatment, an antireflection treatment, and an antiglare treatment. A method for each of the hard coat treatment, the antireflection treatment, and the antiglare treatment is not particularly limited, and a known method can be employed. Examples of the method include a method involving applying a thermosetting or photocurable coating and a method involving depositing a dielectric thin film from the vapor.

### Examples

Hereinafter, the present invention is specifically described by way of examples. It should be noted that the present invention is by no means limited by these examples.
Thermoplastic resin laminates obtained in examples and comparative examples were evaluated as described below.

### <Evaluation for adhesion>

A test piece is cut into a size measuring 10 cm by 10 cm. The resultant is pressed against a cylinder having a diameter of 60 mm so that the (A) layer may be placed outside, and then an evaluation for interlayer adhesion is performed. The test piece with no change in external appearance is regarded as being good.

### <High-temperature, high-humidity exposure test>

A test piece is cut into a square 10 cm on a side. The test piece is suspended with each of their corners as a fulcrum in a thermo-hygrostat whose temperature and relative humidity are set to 85°C and 85%, respectively. The test piece is held in the state for 72 hours. Then, the test piece is taken out and evaluated for the presence or absence of a change in external appearance. The test piece with no change in external appearance is regarded as being good.

### <Pencil scratch hardness test>

Pencils are each pressed against the surface of the (A) resin layer in conformity with JIS K 5600-5-4 at an angle of 45° relative to the surface and a load of 750 g in order of increasing hardness. The hardness of the hardest pencil that caused no scar is evaluated as a pencil hardness. A pencil hardness of 3H or more is regarded as being good.

### Synthesis Example 1 [Production of methyl methacrylate-styrene-vinyl cyclohexane copolymer resin (resin A2) ]

A monomer composition formed of 60.0188 mol% of methyl methacrylate and 39.9791 mol% of styrene as monomer components, and 0.0021 mol% of t-amylperoxy-2-ethylhexanoate as a polymerization initiator was continuously supplied to a 10-L perfect mixing tank with a helical ribbon wing at 1 kg/h, and was then subjected to continuous polymerization at an average retention time of 2.5 hours and a polymerization temperature of 150°C. The resultant was continuously extracted from the bottom so that the liquid level of the polymerization tank was constant, and was then introduced into a desolvating apparatus. Thus, a pellet-shaped methyl methacrylate-styrene copolymer resin (resin A1) was obtained.
The resultant resin A1 was dissolved in methyl isobutyrate. Thus, a 10-mass% methyl isobutyrate solution was prepared. After that, 500 parts by weight of the 10-mass% solution of the resin Al in methyl isobutyrate and 1 part by weight of a 10-mass% Pd/C catalyst were loaded into a 1000-mL autoclave apparatus, and then the mixture was held at a hydrogen pressure of 10 MPa and 200°C for 15 hours so that styrene sites were hydrogenated. The hydrogenation reaction rate of the styrene sites was 96%. The catalyst was removed with a filter, and then the remainder was introduced into a desolvating apparatus. Thus, a pellet-shaped methyl methacrylate-styrene-vinyl cyclohexane copolymer resin (resin A2) was obtained.

### Example 1

A thermoplastic resin laminate was molded with a multilayer extruding apparatus having a uniaxial extruder having an axial diameter of 25 mm, a uniaxial extruder having an axial diameter of 35 mm, a uniaxial extruder having an axial diameter of 65 mm, a feed block linked to all the extruders, and a T-die linked to the feed block. A methyl methacrylate-styrene (3:7) copolymer resin [manufactured by Nippon Steel Chemical Co., Ltd., trade name: ESTYRENE MS300] (resin B1) was continuously introduced into the uniaxial extruder having an axial diameter of 25 mm, and was then extruded under conditions of a cylinder temperature of 240°C and an ejection speed of 0.5 kg/h. In addition, the vinyl copolymer resin obtained in Synthesis Example 1 (resin A2) was continuously introduced into the uniaxial extruder having an axial diameter of 35 mm, and was then extruded under conditions of a cylinder temperature of 250°C and an ejection speed of 3 kg/h. In addition, a polycarbonate resin Iupilon E-2000 manufactured by Mitsubishi Engineering-Plastics Corporation (resin C) was continuously introduced into the uniaxial extruder having an axial diameter of 65 mm, and was then extruded at a cylinder temperature of 270°C and an ejection speed of 50 kg/h. The feed block linked to all the extruders had a three-kind, three-layer distributing pin, and then the resin A2, the resin B1, and the resin C were introduced and laminated at a temperature of 260°C. The resultant was extruded into a sheet shape by the T-die at a temperature of 270°C linked ahead of the feed block, and was then cooled while a mirror surface was transferred with three mirror finish rolls. Thus, a laminate of the resin A2, the resin B1, and the resin C was obtained. In this case, the rolls had temperatures of 120°C, 130°C, and 190°C from an upstream side. The resultant laminate had a thickness of 1.0 mm, the resin A2 layer had a thickness of 70 µm near its center, and the resin B1 layer had a thickness of 25 µm near its center. Table 1 shows the results of the evaluations. All the results of the evaluation for adhesion, the high-temperature, high-humidity exposure test, and the pencil scratch hardness test were good.

### Example 2

A laminate of the resin A2, a resin B2, and the resin C was obtained in the same manner as in Example 1 except that a methyl methacrylate-styrene (2:8) copolymer resin available under the trade name "ESTYRENE MS200" from Nippon Steel Chemical Co., Ltd. (resin B2) was used instead of the methyl methacrylate-styrene (3:7) copolymer resin (resin B1) used in Example 1. The resultant laminate had a thickness of 1.0 mm, the resin A2 layer had a thickness of 70 µm near its center, and the resin B2 layer had a thickness of 25 µm near its center. Table 1 shows the results of the evaluations. All the results of the evaluation for adhesion, the high-temperature, high-humidity exposure test, and the pencil scratch hardness test were good.

### Example 3

A laminate of the resin A2, a resin B3, and the resin C was obtained in the same manner as in Example 1 except that a methyl methacrylate-styrene (6:4) copolymer resin [manufactured by Nippon Steel Chemical Co., Ltd., trade name: ESTYRENE MS600] (resin B3) was used instead of the methyl methacrylate-styrene (3:7) copolymer resin (resin B1) used in Example 1. The resultant laminate had a thickness of 1.0 mm, the resin A2 layer had a thickness of 70 µm near its center, and the resin B3 layer had a thickness of 25 µm near its center. Table 1 shows the results of the evaluations. All the results of the evaluation for adhesion, the high-temperature, high-humidity exposure test, and the pencil scratch hardness test were good.

### Example 4

A laminate of the resin A2, a resin B4, and the resin C was obtained in the same manner as in Example 1 except that an acrylonitrile-styrene copolymer resin [manufactured by Asahi Kasei Chemicals, trade name: Stylac AS] (resin B4) was used instead of the methyl methacrylate-styrene (3:7) copolymer resin (resin B1) used in Example 1. The resultant laminate had a thickness of 1.0 mm, the resin A2 layer had a thickness of 70 µm near its center, and the resin B4 layer had a thickness of 25 µm near its center. Table 1 shows the results of the evaluations. All the results of the evaluation for adhesion, the high-temperature, high-humidity exposure test, and the pencil scratch hardness test were good.

### Comparative Example 1

A laminate of a resin A3, the resin B1, and the resin C was obtained in the same manner as in Example 1 except that a polymethyl methacrylate resin [manufactured by KURARAY CO., LTD., trade name: PARAPET HR-1000L] (resin A3) was used instead of the methyl methacrylate-styrene-vinyl cyclohexane copolymer resin (resin A2) used in Example 1. The resultant laminate had a thickness of 1.0 mm, the resin A3 layer had a thickness of 70 µm near its center, and the resin B1 layer had a thickness of 25 µm near its center. Table 1 shows the results of the evaluations. The result of the high-temperature, high-humidity exposure test was not good (warping, whitening).

### Comparative Example 2

A laminate of the resin A3, a resin B5, and the resin C was obtained in the same manner as in Comparative Example 1 except that: a polymethyl methacrylate resin [manufactured by KURARAY CO., LTD., trade name: PARAPET HR-1000L] (resin B5) was used instead of the methyl methacrylate-styrene copolymer resin (resin B1) used in Comparative Example 1; and the cylinder temperature was set to 250 °C. The resultant laminate had a thickness of 1.0 mm, the resin A3 layer had a thickness of 70 µm near its center, and the resin B5 layer had a thickness of 25 µm near its center. Table 1 shows the results of the evaluations. The result of the high-temperature, high-humidity exposure test was not good (warping, whitening).

### Comparative Example 3

A laminate of the resin A2, the resin B5, and the resin C was obtained in the same manner as in Example 1 except that: a polymethyl methacrylate resin [manufactured by KURARAY CO., LTD., trade name: PARAPET HR-1000L] (resin B5) was used instead of the methyl methacrylate-styrene copolymer resin (resin B1) used in Example 1; and the cylinder temperature was set to 250°C. The resultant laminate had a thickness of 1.0 mm, the resin A2 layer had a thickness of 70 µm near its center, and the resin B5 layer had a thickness of 25 µm near its center. Table 1 shows the results of the evaluations. The result of the evaluation for adhesion was not good (peeling)

### Comparative Example 4

A laminate of the resin A2, a resin B6, and the resin C was obtained in the same manner as in Example 1 except that a polystyrene resin [manufactured by PS Japan Corporation, trade name: PSJ POLYSTYRENE] (resin B6) was used instead of the methyl methacrylate-styrene copolymer resin (resin B1) used in Example 1. The resultant laminate had a thickness of 1.0 mm, the resin A2 layer had a thickness of 70 µm near its center, and the resin B3 layer had a thickness of 25 µm near its center. Table 1 shows the results of the evaluations. The result of the evaluation for adhesion was not good (peeling).

[Table 1]

**Table 1**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Laminate constitution (A numerical value in the table represents a thickness [µm] near a center.) | | | | | | | | |
| (A) Layer | | | | | | | | |
| Methyl methacrylate-styrene-vinyl cyclohexane copolymer resin (resin A2) | 70 | 70 | 70 | 70 | | | 70 | 70 |
| Polymethyl methacrylate resin (resin A3) | | | | | 70 | 70 | | |
| (B) Layer | | | | | | | | |
| Methyl methacrylate-styrene (3:7) copolymer resin (resin B1) | 25 | | | | 25 | | | |
| Methyl methacrylate-styrene (2:9) copolymer resin (resin B2) | | 25 | | | | | | |
| Methyl methacrylate-styrene (6:4) copolymer resin (resin B3) | | | 25 | | | | | |
| Aczylonitrile-styrene copolymer resin (resin B4) | | | | 25 | | | | |
| Polymethyl methacrylate resin (resin B5) | | | | | | 25 | 25 | |
| Polystyrene resin (resin B6) | | | | | | | | 25 |
| (C) Layer | | | | | | | | |
| Polycarbonate resin (resin C) | 905 | 905 | 905 | 905 | 905 | 905 | 905 | 905 |
| Results of evaluations | | | | | | | | |
| (1) Evaluation for adhesion | ○ | ○ | ○ | ○ | ○ | ○ | ×(peeling) | ×(peeling) |
| (2) High-temperature, high-humidity exposure test | ○ | ○ | ○ | ○ | × (warping, whitening) | × (warping, whitening) | - | - |
| (3) Pencil scratch hardness test (hardness) | 3H | 3H | 3H | 3H | 3H | 3H | - | - |

### Industrial Applicability

The thermoplastic resin laminate of the present invention has such characteristics as to be excellent in, for example, weather resistance against high-temperature, high-humidity environments, abrasion resistance, and interlayer adhesion. The thermoplastic resin laminate is suitably used as an optical product such as a transparent substrate material or a transparent protective material. In particular, the thermoplastic resin laminate is suitably used as a front surface plate for the display portion of an OA instrument or portable electronic instrument,

## Claims

1. A thermoplastic resin laminate, comprising:
a thermoplastic transparent resin (A) layer;
a thermoplastic resin (B) layer formed of a methyl methacrylate-styrene copolymer and/or an acrylonitrile-styrene copolymer; and
a thermoplastic resin (C) layer formed of a polycarbonate-based resin,
wherein the (B) layer is laminated on one surface, or each of both surfaces, of the (C) layer, and
the (A) layer is laminated on a surface of the (B) layer,
wherein the thickness of the (A) layer is 10 to 500 µm and the thickness of the (B) layer is 5 to 50 µm and the thickness of the (C) layer is 500 to 2,000 µm; and
wherein the thermoplastic transparent resin (A) comprises a vinyl copolymer resin containing a (meth)acrylate constituent unit (a) represented by the following general formula (1) and an aliphatic vinyl constituent unit (b) represented by the following general formula (2) at a molar ratio between the (meth)acrylate constituent unit (a) and the aliphatic vinyl constituent unit (b) of 15:85 to 85:15: 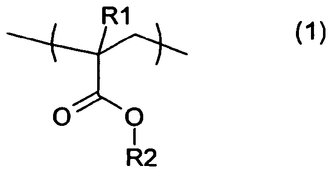
where R1 represents hydrogen or a methyl group, and R2 represents an alkyl group having 1 to 16 carbon atoms; 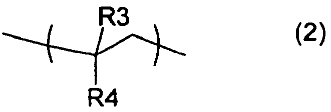
where R3 represents hydrogen or a methyl group, and R4 represents a cyclohexyl group which may have an alkyl substituent having 1 to 4 carbon atoms.

2. The thermoplastic resin laminate according to claim 1, wherein:
the thermoplastic transparent resin (A) is obtained by polymerizing at least one kind of a (meth)acrylate monomer and at least one kind of an aromatic vinyl monomer and hydrogenating 70% or more of aromatic double bonds after the polymerization; and
the resin has a glass transition temperature in the range of 110 to 140°C,
wherein the glass transition temperature is calculated by a middle-point method from values obtained by subjecting 10 mg of a sample to measurement with a differential scanning calorimeter at a rate of temperature increase of 10 °C/min.

3. The thermoplastic resin laminate according to claim 1 or 2, wherein
R1 and R2 in the general formula (1) each represent a methyl group.

4. The thermoplastic resin laminate according to claim 1 or 2, wherein
R3 in the general formula (2) represents hydrogen and R4 in the formula represents a cyclohexyl group.

5. The thermoplastic resin laminate according to claim 1 or 2, wherein
one surface, or each of both surfaces, of the thermoplastic resin laminate is subjected to one or more of a hard coat treatment, an antireflection treatment, and an antiglare treatment.

6. A transparent substrate material formed of the thermoplastic resin laminate according to any one of claims 1 to 5.

7. A transparent protective material formed of the thermoplastic resin laminate according to any one of claims 1 to 5.

## Patentansprüche

1. Thermoplastisches Harzlaminat, umfassend:26
eine thermoplastische transparente Harzschicht (A);
eine thermoplastische Harzschicht (B), die aus einem Methylmethacrylat-Styrol-Copolymer und/oder einem Acrylnitril-Styrol-Copolymer gebildet ist; und
eine thermoplastische Harzschicht (C), die aus einem Harz auf Polycarbonat-Basis gebildet ist,
wobei die Schicht (B) auf eine Oberfläche oder auf beide Oberflächen der Schicht (C) laminiert ist, und
die Schicht (A) auf eine Oberfläche der Schicht (B) laminiert ist,
wobei die Dicke der Schicht (A) 10 bis 500 µm beträgt und die Dicke der Schicht (B) 5 bis 50 µm beträgt und die Dicke der Schicht (C) 500 bis 2.000 µm beträgt; und
wobei das thermoplastische transparente Harz (A) ein Vinylcopolymerharz umfasst, welches eine (Meth)acrylat-Aufbaueinheit (a), die durch die folgende allgemeine Formel (1) dargestellt ist, und eine aliphatische Vinyl-Aufbaueinheit (b), die durch die folgende allgemeine Formel (2) dargestellt ist, in einem molaren Verhältnis zwischen der (Meth)acrylat-Aufbaueinheit (a) und
der aliphatischen Vinylaufbaueinheit (b) von 15:85 bis 85:15 enthält: 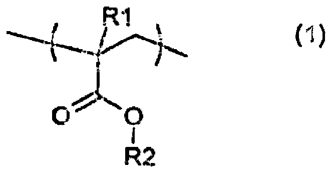
wobei R1 Wasserstoff oder eine Methylgruppe darstellt, und R2 eine Alkylgruppe mit 1 bis 16 Kohlenstoffatomen darstellt; 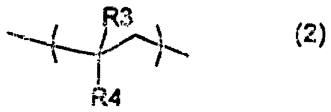
wobei R3 Wasserstoff oder eine Methylgruppe darstellt, und R4 eine Cyclohexylgruppe darstellt, die einen Alkylsubstituenten mit 1 bis 4 Kohlenstoffatomen aufweisen kann.

2. Thermoplastisches Harzlaminat nach Anspruch 1 , wobei:
das thermoplastische transparente Harz (A) erhalten wird durch Polymerisieren mindestens einer Art eines (Meth)acrylatmonomeren und mindestens einer Art eines aromatischen Vinylmonomeren und Hydrieren von 70 % oder mehr der aromatischen Doppelbindungen nach der Polymerisation; und
das Harz eine Glasübergangstemperatur im Bereich von 110 bis 140°C aufweist,
wobei die Glasübergangstemperatur berechnet wird durch eine Mittelpunktmethode aus Werten, die erhalten werden durch Durchführen einer Messung mit 10 mg einer Probe mit einem Differential-Scanning-Kalorimeter mit einer Temperaturerhöhungsgeschwindigkeit von 10°C/min.

3. Thermoplastisches Harzlaminat nach Anspruch 1 oder 2, wobei R1 und R2 in der allgemeinen Formel (1) jeweils eine Methylgruppe darstellen.

4. Thermoplastisches Harzlaminat nach Anspruch 1 oder 2, wobei R3 in der allgemeinen Formel (2) Wasserstoff darstellt und R4 in der Formel eine Cyclohexylgruppe darstellt.

5. Thermoplastisches Harzlaminat nach Anspruch 1 oder 2, wobei eine Oberfläche oder beide Oberflächen des thermoplastischen Harzlaminats einer oder mehreren von einer Hartbeschichtungsbehandlung, einer Antireflexionsbehandlung und einer Antiglanzbehandlung unterzogen werden.

6. Transparentes Substratmaterial, das aus dem thermoplastischen Harzlaminat nach einem der Ansprüche 1 bis 5 gebildet ist.

7. Transparentes Schutzmaterial, das aus dem thermoplastischen Harzlaminat nach einem der Ansprüche 1 bis 5 gebildet ist.

## Revendications

1. Stratifié résineux thermoplastique, comprenant:
- une couche résineuse thermoplastique transparente (A) ;
- une couche résineuse thermoplastique (B) formée d'un copolymère méthyle méthacrylate-styrène et/ou d'un copolymère acrylonitrile-styrène ; et
- une couche résineuse thermoplastique (C) formée d'une résine à base de polycarbonate,
- dans lequel la couche (B) est stratifiée sur une surface, ou sur chacune des deux surfaces de la couche (C), et
la couche (A) est appliquée sur une surface de la couche (B),
dans lequel l'épaisseur de la couche (A) est 10 à 500 µm et l'épaisseur de la couche (B) est 5 à 50 µm et l'épaisseur de la couche (C) est 500 à 2000 µm ; et dans lequel la résine thermoplastique transparente (A) comprend une résine de vinyle copolymère contenant une unité constitutive de (méth)acrylate (a) représentée par la formule générale suivante (1) et une unité constitutive de vinyle aliphatique (b) représentée par la formule générale suivante (2) à un rapport molaire entre l'unité constitutive de (méth)acrylate (a) et l'unité constitutive de vinyle aliphatique (b) de 15:85 à 85:15 : 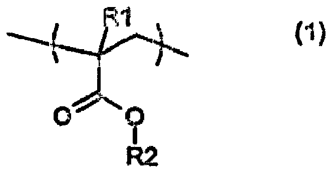 dans lequel R1 représente l'hydrogène ou un groupe méthyle, et R2 représente un groupe alkyle ayant 1 à 16 atomes de carbone ; 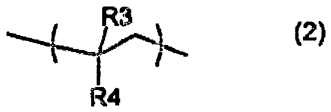 dans lequel R3 représente l'hydrogène ou un groupe méthyle, et R4 représente un groupe cyclohéxyle qui peut avoir un substituant alkyle ayant 1 á 4 atomes de carbone.

2. Stratifié résineux thermoplastique selon la revendication 1, dans lequel :
la résine thermoplastique transparente (A) est obtenue par polymérisation d'au moins une sorte d'un monomère de (méth)acrylate et au moins une sorte d'un monomère de vinyle aromatique et hydrogénation de 70% ou plus de liaisons doubles aromatiques après la polymérisation ; et
la résine a une température de transition vitreuse dans la gamme de 110 à 140°C,
dans lequel la température de transition vitreuse est calculée par la méthode de point médian à partir de valeurs obtenues par le fait de soumettre 10 mg d'un échantillon à la mesure avec un calorimètre différentiel à balayage à un taux d'augmentation de température de 10°C/min.

3. Stratifié résineux thermoplastique selon la revendication 1 ou 2, dans lequel R1 et R2 dans la formule générale (1) chacun représentent un groupe méthyle.

4. Stratifié résineux thermoplastique selon la revendication 1 ou 2, dans lequel R3 dans la formule générale (2) représente l'hydrogène et R4 dans la formule représente un groupe cyclohéxyle.

5. Stratifié résineux thermoplastique selon la revendication 1 ou 2, dans lequel une surface ou chacune des deux surfaces du stratifié résineux thermoplastique est soumise à un ou plusieurs d'un traitement à revêtement dur, un traitement antiréflexif et un traitement antiaveuglant.

6. Matériau substrat transparent formé du stratifié résineux thermoplastique selon l'une des revendications 1 à 5.

7. Matériau de protection transparent formé du stratifié résineux thermoplastique selon l'une des revendications 1 à 5.
